(19)

Europäisches
Patentamt
European
Patent Office
Office européen
des brevets

(11)  **EP 2 150 590 B1**

(12)  **EUROPEAN PATENT SPECIFICATION**

(45) Date of publication and mention
of the grant of the patent:
**03.12.2014  Bulletin 2014/49**

(51) Int Cl.:
***C09D 5/03*** *(2006.01)*    ***C09D 167/00*** *(2006.01)*
***C08L 67/02*** *(2006.01)*

(21) Application number: **08749232.8**

(22) Date of filing: **29.04.2008**

(86) International application number:
**PCT/EP2008/003479**

(87) International publication number:
**WO 2008/135209 (13.11.2008 Gazette 2008/46)**

(54)  **COMPOSITION COMPRISING ANTI-BRIDGING AGENT**

ZUSAMMENSETZUNG MIT VERBRÜCKUNGSSCHUTZMITTEL

COMPOSITION COMPRENANT UN AGENT ANTI-PONTAGE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority:  **04.05.2007  EP 07009051
04.05.2007  EP 07009050
04.05.2007  EP 07009049
30.01.2008  EP 08101101
30.01.2008  EP 08101103
30.01.2008  EP 08101104
31.01.2008  EP 08001820**

(43) Date of publication of application:
**10.02.2010  Bulletin 2010/06**

(73) Proprietor: **DSM IP Assets B.V.
6411 TE Heerlen (NL)**

(72) Inventors:
• **BOLKS, Jurjen
NL-8031 VW Zwolle (NL)**

• **DULLAERT, Konraad
B-3001 Heverlee (BE)**
• **MOLHOEK, Leendert, Jan
NL-8072 HV Nunspeet (NL)**
• **STEEMAN, Paulus Antonius Maria
NL-6176 JC Spaubeek (NL)**

(74) Representative: **Heijman, Renske Harriët
DSM Intellectual Property
Geleen Office
P.O. Box 9
6160 MA Geleen (NL)**

(56) References cited:
**WO-A-99/31186      WO-A-2004/111142
WO-A-2006/066764    US-A- 5 728 779**

<u>Remarks:</u>
The file contains technical information submitted after
the application was filed and not included in this
specification

EP 2 150 590 B1

**Description**

The invention relates to an anti-bridging agent, a resin composition comprising said anti-bridging agent, use of said resin composition in a powder paint composition, a powder coating composition comprising said anti-bridging agent, a powder paint composition comprising said anti-bridging agent, a process for manufacturing a coated substrate using the powder coating or powder paint composition, the coated substrate, a crosslinker composition comprising the anti-bridging agent, a pigment particle coated with the anti-bridging agent, a filler particle coated with the anti-bridging agent, and to the use of the anti-bridging agent as anti-yellowing agent.

Powder coatings are generally known in the art and are for example described by Misev T.A. in Powder Coatings, Chemistry and Technology, John Wiley and Sons, Chichester, 1991.

In general an object is to provide a substrate with a layer of a heat curable powder coating composition and after which the powder coating composition is cured to obtain a coating layer. Often curing occurs at elevated temperatures.

Desirable properties of powder coatings include improved optical properties, mechanical properties, chemical resistance against solvents (for example xylene, acteone, alcohols), moisture resistance, thermal resistance and outdoor resistance.

Optical properties include but are not limited to appearance which may be colour, gloss, light diffusion by a matt surface, transparency, translucency or opacity which is also referred to as hiding power.

Mechanical properties include but are not limited to toughness, strength, impact resistance, scratch resistance, flexibility, stiffness or abrasion resistance.

Outdoor resistance includes but is not limited to resistance to conditions such as exposure to salty air, a warm or cool temperature, rain, hail, sand storms, or a combination thereof.

A powder coating composition herein is referred as a composition comprising at least a resin, at least a crosslinker.

A powder paint composition herein is referred to herein is referred as a composition comprising at least a resin, at least a crosslinker and at least a pigment or a filler or a combination of a pigment and a filler.

Powder paint compositions contain a resin, a crosslinker and a certain amount of pigment for example for aesthetic purposes. Some applications require high pigment loading in order to provide the necessary effect. This is especially the case where only a thin layer of coating composition is applied. For example, home furnishings, pre-coated metals, kitchen ware and white goods are often coated with only a thin layer.

However, once the pigment loading exceeds about 40 w/w %, and particularly above 50 w/w % based on the total powder coating composition, the final coating often has undesirable properties. For example, the flow, gloss, pigment-coverage, haze and/or aesthetic properties deteriorate.

It has been suggested that once the pigment load reached a certain level it could no longer be uniformly dispersed in the coating and hence caused unacceptable characteristics. It has also been suggested that poor pigment dispersion causes roughening of the coating surface and can lead to coatings with poor flow, low gloss and haze (Misev T.A, Powder Coatings, chemistry and Technology, John Wiley and Sons, Chichester, 1991).

WO2006/066764 discloses a composition suitable for a powder coating composition comprising at least one resin and at least one dispersant.

Known dispersants have a tendency to reduce the powder stability of a powder coating composition or of a powder paint composition, in particular at high pigment loading. As used herein, 'high pigment load' refers to pigment level of 40 w/w % or greater, especially 45 w/w % or greater and particularly 50 w/w % or greater based on the total powder paint composition.

There exists a need for a powder coating composition which has acceptable physical properties in particular with acceptable powder stability.

There further exists a need for a powder paint composition with pigment loading in which has acceptable physical properties. In particular there is a need for a powder paint composition comprising a resin, a crosslinker and a high pigment load with acceptable powder stability.

The present invention provides an anti-bridging agent having a general formula $X_n$-$Y_m$ wherein X is a group with an affinity to a pigment particle and/or to a filler particle, wherein Y is a group with an affinity to a polymer, wherein n is an integer from 1-3 and m is an integer from 1-4, and wherein the Tg of the anti-bridging agent is at least 30°C and less than 70°C, said anti-bridging agent is as described herein and as defined by the claims.

The use of the anti-bridging agent according to the invention in a powder coating composition or a powder paint composition leads to acceptable powder stability of such compositions.

All compositions of the invention comprise at least one anti-bridging agent.

As used herein, "anti-bridging agent" refers to a substance that decreases the bridging of pigment particles by the resin. Preferred anti-bridging agents do this during the compound preparation and the early stages of powder paint flow and cure.

Preferred anti-bridging agents for use herein have the general formula $X_n$-$Y_m$ wherein X is a pigment reactive group, Y is a resin soluble group, n is an integer from 1 to 3 and m is an integer from 1 to 4. Preferably n is 1 and m is an integer from 1 to 3.

The reactivity or affinity of the X group(s) towards the pigment particles can be defined by measuring Langmuir adsorption isotherms. Resin, anti-bridging agent and pigment are mixed together in a suitable liquid medium. After a set amount of time the pigment is filtered off and the amounts of the different components remaining in the liquid phase are measured. Thereby, the amount of the components which have adhered to the pigment surface can be calculated. The affinity of the X groups towards the pigment particles can be calculated in relation to the functional groups of the resin. If that affinity is high enough compared to the resin functional groups, the anti-bridging agent will preferentially attach to the pigment surface and prevent significant resin-pigment interaction.

Preferably group Y is compatible with the polymer comprising the polymer functional group and more preferably group Y is a polymeric species which is compatible with the polymer in the powder coating composition according to the invention.

Group X is a chemical group that due to its character has a higher affinity for the surface of the pigment and/or filler particle compared to the affinity for the polymer comprising polymer functional groups.

In one aspect of the invention, at least 70 mol %, preferably at least 80 mol %, more preferably at least 90 mol % of the total amount of anti-bridging agent present in the compositions according to the invention has the general formula X" - $Y_m$, wherein n=1 and m=1.

Group Y of the anti-bridging agent may have for example a linear or nearly linear, branched, star or dendritic structure, preferably a linear structure.

The glass transition temperature (Tg) of the anti-bridging agent is at least 30 °C, preferably at least 35 °C, preferably at least 40 °C, preferably at least 45 °C, preferably at least 50 °C, preferably at least 55 °C, preferably at least 60 °C, preferably at least 65 °C.

The glass transition temperature (Tg) of the anti-bridging agent is preferably less than 70 °C, preferably less than 60 °C and preferably less than 50 °C. In an aspect of the invention the glass transition temperature (Tg) of the anti-bridging agent is preferably in a range from 45 °C to 65 °C.

Group Y is a chemical group that due to its character has a higher affinity for the polymer comprising polymer functional groups as compared to the pigment and / or filler particle.

Examples of suitable groups Y are polyester-, polyacrylate- or polyurethane-polymer chains.

Preferably, the anti-bridging agent comprises a reactive group Z that is reactive towards the polymer and/or crosslinker. Preferably the reactive group Z has a reactivity similar to the polymer functional group or to the crosslinker reactive group and has a lower affinity towards the pigment/filler particles than the "pigment / filler particle-affinitive" group X. This way the anti-bridging agent may be build into the polymeric network formed by the polymer and the crosslinker during cure and may become part of such polymeric network. Examples of suitable reactive groups Z for this purpose include carboxylic acid, amine, epoxy, isocyanate, anhydride, and alcohol.

A suitable group Y may be based for example on a condensation reaction between linear aliphatic, branched aliphatic and/or cyclo-aliphatic polyols and aliphatic, cyclo-aliphatic and/or aromatic poly carboxylic acids or its anhydrides. The ratio of polyol and acids or anhydrides is preferably such that there is an excess of alcohol over acid or anhydride so as to form a polyester which has free hydroxyl groups.

Suitable acids for group Y comprise isophthalic acid, terephthalic acid, 2,6-naphthalene dicarboxylic acid, 4,4'-oxybisbenzoic acid, 3,6-dichloro phthalic acid, tetrachloro phthalic acid, tetrahydro phthalic acid, trimellitic acid, pyromellitic acid, hexahydro terephthalic acid (cyclohexane dicarboxylic acid), hexachloro endomethylene tetrahydro phthalic acid (HET acid), orthophthalic acid, azelaic acid, sebacic acid, decane dicarboxylic acid, adipic acid, succinic acid, maleic acid, fumaric acid, itaconic acid or mixtures thereof. These acids may be used as such, or, in so far as available as their anhydrides, acid chlorides, and/or lower alkyl esters preferably C1-C3 alkylester.

Preferably, the polyester comprises at least isophthalic acid unit and/or a terephthalic acid unit.

Trifunctional or higher functional acids may be used also. Examples of such suitable acids include trimellitic acid and pyromellitic acid.

Hydroxy carboxylic acids, for example, 12-hydroxy stearic acid or hydroxy pivalic acid, may also be used.

Monocarboxylic acids may also be used if desired. Examples of these acids include benzoic acid, tert.-butyl benzoic acid, hexahydro benzoic acid and saturated aliphatic monocarboxylic acids.

Suitable polyalcohols for the polyester polymer tail Y comprise polyalcohols that can be reacted with carboxylic acids, examples of which are given above, to obtain the polyester, they include in particular diols, for example aliphatic diols. Examples of diols include ethylene glycol, propane-1,2-diol, propane-1,3-diol, butane-1,2-diol, butane-1,4-diol, butane-1,3-diol, 2,2-dimethylpropanediol-1,3 (neopentyl glycol), hexane-2,5-diol, hexane-1,6-diol, 2,2-bis-(4-hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, 2-ethyl, 2-butyl propanediol-1,3 (butylethylpropane diol), 2-ethyl, 2-methyl propanediol-1,3 (ethylmethylpropane diol) and 2-methylpropanediol-1,3 (MP-Diol).

Tri- or higher functional alcohols may be used in order to obtain branched polyesters. Examples of such suitable polyols include glycerol, hexanetriol, trimethylol ethane, trimethylol propane, tris-(2-hydroxyethyl)-isocyanurate, penta erythritol and sorbitol.

In an embodiment of the anti-bridging agent according to the invention the molar weight Mn is at least 1000 g/mol.

The molar weight (Mn) of the anti-bridging agent is less than 7000 g/mol, preferably less than 6000, preferably less than 5000, preferably less than 4500 g/mol.

The molar weight (Mn) of the anti-bridging agent is more than 1000, preferably more than 1500, preferably more than 2000, preferably more than 2500 and preferably more than 3000 g/mol.

In a further aspect of the invention the molar weight (Mw) of the anti-bridging agent is preferably more than 2000, preferably more than 2500, preferably more than 3000, preferably more than 3500 and preferably more than 4000 g/mol.

The anti-bridging agent herein preferably comprises at least one reactive group X that has a high reactivity towards the surface of the pigment. Examples of suitable reactive groups include phosphoric acids, sulphuric acids, sulphonic acids, boronic acids, maleic anhydrides, and combinations thereof. More preferred reactive groups are phosphoric acids.

The anti-bridging agent according to the invention X is preferably selected from the group consisting of the esters form phosphoric acid ($-O-PO_2H_2$), phosphonic acid, sulphuric acid, sulphonic acid, sulfamine acid ($-O-SO_2NH_2$), boric acid ($-O-B(OH)_2$), pyridine ethanol, HET acid, maleic acid, and combinations thereof.

By selecting $\times$ from this group, the flow during curing of the powder paint composition according to the invention may be improved.

The anti-bridging agent according to the invention Y is a polyester manufactured from at least a polyol monomer selected from the group consisting of neopentyl glycol, ethylene glycol, diethylene glycol, propylene glycol, trimethylolpropane and glycerol and at least a polycarboxylic acid monomer selected from the group consisting of terephthalic acid, isophthalic acid, orthophthalic acid, adipic acid, succinic acid and trimellitic anhydride.

The invention further relates to a resin composition.

The resin composition according to the invention is suitable for use in a powder paint composition and comprises:

- at least one resin and
- at least one anti-bridging agent according to the invention.

The amount of the anti-bridging agent in the resin composition is preferably at least about 0.1 w/w %, more preferably at least about 0.3 w/w %, even more preferably at least about 0.5 w/w %, even more preferably at least about 1 w/w % based on the total amount of resin in the resin composition. The amount of anti-bridging agent is preferably about 5 w/w % or less based on the total amount of resin in the resin composition.

The present compositions according to the invention comprise at least one resin. The resin should be suitable for use in powder paint compositions. Examples of suitable polymers include but are not limited to acid functional polymers, wherein the polymer is selected from a group comprising polyester, polyacrylate, polyamide, polyimide, polyurethane and polycarbonate, and copolymers thereof such as polyester-polyimide copolymer and polyester-polyamide copolymer. Preferably , the polymer is selected from the group consisting of polyester, polyacrylate, polyurethane, polyamide and polycarbonate.

Preferably, the resin has an acid or hydroxy value between 20 and 200 mg KOH/gram resin, more preferably between 20 and 120 mg KOH/gram resin.

The number average molecular weight (Mn in g/mol) of the resin is preferably between about 1,000 and about 7,000, more preferably between about 1,400 and about 6,000.

Preferably the resin is an amorphous solid at room temperature.

The resin preferably has a viscosity lower than 200 Pa.s (measured at 160 °C, Rheometrics CP 5), more preferably lower than 150 Pa.s. The glass transition temperature (Tg) of the resin is preferably greater than about 20 °C, more preferably greater than about 35°C, even more preferably greater than about 45°C. The $T_g$ of the resin is preferably less than about 100 °C, more preferably less than about 85°C, even more preferably less than about 80°C. The $T_g$ may be determined by differential scanning calorimetry (DSC) at a heating rate of 5 °C/min.

The resin itself can be prepared in ways known to the man skilled in the art, see for example "Powder Coatings, Chemistry and Technology" by T.A.Misev; John Wiley and Sons, 1991, the whole book in general and Chapter 2 in particular, which is hereby incorporated by reference.

Preferably the resins for use herein are selected from polyester resins, acrylic resins, polyesteramide resins, epoxy resins, and combinations thereof. More preferably the resins for use herein are selected from polyester resins, acrylic resins, polyesteramide resins, and combinations thereof. Even more preferably the resin is selected from polyesters, more preferably from acid- and/or hydroxy- functional polyesters, even more preferably from carboxylic acid group-containing polyesters.

## POLYESTERS

The polyester resin and the polyester in group Y of the anti-bridging agent may be based on a condensation reaction of linear aliphatic, branched aliphatic and cyclo-aliphatic polyols with aliphatic, cyclo-aliphatic and/or aromatic poly carboxylic acids and anhydrides. The ratio of polyol and acids or anhydrides is such that there is an excess of acid or anhydride over alcohol so as to form a polyester which has free carboxylic groups.

Suitable acid and anhydride monomers to form the polyester resin include monomers such as for example, isophthalic acid, terephthalic acid, orthophthalic acid, 2,6-naphthalene dicarboxylic acid, 4,4'-oxybisbenzoic acid, 3,6-dichloro phthalic acid, tetrachloro phthalic acid, tetrahydro phthalic acid, trimellitic acid, pyromellitic acid, hexahydro terephthalic acid (cyclohexane dicarboxylic acid), hexachloro endomethylene tetrahydro phthalic acid, phthalic acid, azelaic acid, sebacic acid, decane dicarboxylic acid, adipic acid, succinic acid, maleic acid, fumaric acid, and mixtures thereof. These acids may be used as such, or, in so far as available as their anhydrides, acid chlorides, and/or lower alkyl esters. Preferably, the polyester is based on at least one of isophthalic acid and/or terephthalic acid. Trifunctional or higher functional acids may be used also. Examples of suitable such acids include trimellitic acid or pyromellitic acid. These tri- or higher functional acids may be used as end groups or to obtain branched polyesters.

Hydroxy carboxylic acids and/or optionally lactones can also be used, for example, 12-hydroxy stearic acid, hydroxy pivalic acid and ε-caprolactone.

Monocarboxylic acids may also be used if desired. Examples of these acids are benzoic acid, tert.-butyl benzoic acid, hexahydro benzoic acid and saturated aliphatic monocarboxylic acids.

Useful polyalcohols, in particular diols, reactable with the carboxylic acids to obtain the polyester include aliphatic diols. Examples are ethylene glycol, propane-1,2-diol, propane-1,3-diol, butane-1,2-diol, butane-1,4-diol, butane-1,3-diol, 2,2-dimethylpropanediol-1,3 (neopentyl glycol), hexane-2,5-diol, hexane-1,6-diol, 2,2-bis-(4hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, 2-ethyl, 2-butyl propanediol-1,3 (butylethylpropane diol), 2-ethyl, 2-methyl propanediol-1,3 (ethylmethylpropane diol) and 2-methylpropanediol-1,3 (MP-Diol).

Tri- or higher functional alcohols may be used in order to obtain branched polyesters. Examples of suitable such polyols include glycerol, hexanetriol, trimethylol ethane, trimethylol propane, tris-(2-hydroxyethyl)-isocyanurate, penta erythritol and sorbitol.

The polyester may be prepared according to conventional procedures by esterification or transesterification, optionally in the presence of customary esterification catalysts for example dibutyltin oxide or tetrabutyl titanate. Preparation conditions and the COOH/OH ratio can be selected so as to obtain end products that have a particular desired acid number and/or a hydroxyl number.

## POLYACRYLATES

The polyacrylate resin and the polyacrylate in group Y of the anti-bridging agent may comprise the polymerization product of acrylate monomers. Suitable acrylate monomers include (meth)acrylic acid, methyl (meth)acrylate, ethyl (meth)acrylate, butyl (meth)acrylate, propyl (meth)acrylate, 2-ethylhexyl (meth)acrylate, cyclohexyl (meth)acrylate, decyl (meth)acrylate, isodecyl (meth)acrylate, benzyl (meth)-acrylate and hydroxyalkyl (meth)acrylates such as hydroxyethyl (meth)acrylate and hydroxypropyl (meth)acrylate and/or glycidyl esters or glycidyl ethers of alkyl (meth)acrylates. By preference, the polyacrylates are substantially vinyl chloride-free. The polyacrylates can be obtained by known methods. In these methods, comonomers such as, for example, styrene, maleic acid/anhydride, as well as small amounts of ethylene, propylene and acrylonitrile, can be used. Other vinyl or alkyl monomers, such as, for example, octene, triallyl isocyanurate and diallyl phthalate can be added in small amounts.

A polyacrylate containing epoxy groups may be obtained by using glycidyl (meth)acrylates in the synthesis of the polyacrylate.

A polyacrylate containing acid groups is usually obtained by copolymerization of the desired amount of acid, such as, for example, (meth)acrylic acid, maleic acid or fumaric acid.

A polyacrylate containing hydroxyl groups may be obtained by copolymerization of the desired amount of monomers containing hydroxyl groups, such as, for example, hydroxyethyl (meth)acrylate and/or hydroxypropyl (meth)acrylate.

A polyacrylate containing thiol groups may be obtained by copolymerization of a sufficient amount of a monomer containing a preferably blocked thiol group. Monomers containing a (blocked) thiol group include S-acetyl esters of thiol-ethyl (meth)acrylate, thiol-propyl(meth) acrylate, and combinations thereof. After polymerisation, the acetyl group can be deblocked by hydrolysis.

A polyacrylate containing acetylacetonate groups may be obtained by copolymerising the acetoacetonate ester of 2-hydroxy ethylacrylate.

The Tg of the polyacrylate resin is generally between about 30 °C and about 120 °C. Relatively greater amounts of crosslinker can be used in the binder composition when the Tg is at the higher end of the range. For optimum storage stability the Tg is preferably higher than 50 °C. For polymer processing reasons the Tg is preferably lower than 100 °C.

In general the viscosity of the polyacrylate resin is between 100 and 8000 dPas (measured at 158 °C; Emila).

Polyacrylates, such as epoxy, carboxy and hydroxy functional polyacrylates, are described in U.S. Patent No. 3,752,870, U.S. Patent No. 3,787,340, U.S. Patent No. 3,758,334, and G.B. Patent Specification 1,333,361.

POLYAMIDES

The polyamide resin and the polyamide in the group Y of the anti-bridging agent may comprise the polycondensation reaction product (or residue) of at least one diamine monomer and at least one dicarboxylic acid monomer.

The polyamide can be based on one type of amine and one type of carboxylic acid or the polyamide can be based on for example one type of amine combined with more than one type of carboxylic acid or it can be based on one type of carboxylic acid with more than one type of amine or it can be based on the combination of more than one type of amine with more than one type of carboxylic acid. It is however preferred to use a polyamide based on 2 to 4 diamines and 1 to 3 dicarboxylic acids.

Suitable dicarboxylic acid monomers include for example dicarboxylic acids having from 3 to about 40 carbon atoms, and more preferably dicarboxylic acids selected from aromatic dicarboxylic acids preferably having 8 to 14 carbon atoms,aliphatic dicarboxylic acids preferably having 4 to 12 carbon atoms, and/orcycloaliphatic dicarboxylic acids preferably having 8 to 12 carbon atoms. The dicarboxylic acid monomers may be branched, non-linear or linear.

Examples of suitable dicarboxylic acid monomers are for example phthalic acid, isophthalic acid, terephthalic acid, 1,4-cyclohexanedicarboxylic acid, naphthalene-2,6-dicarboxylic acid, cyclohexanediacetic acid, diphenyl-4,4'-dicarboxylic acid, phenylenedi (oxyacetic acid), sebacic acid, succinic acid, adipic acid, glutaric acid and/or azelaic acid.

The diamine monomer can for example be of an aliphatic, cycloaliphatic, aliphatic-aromatic or aromatic nature. The diamine monomer may comprise an aliphatic diamine having for example 2 to 12 carbon atoms. The aliphatic diamines may also contain aromatic groups in the molecule. With aliphatic amine is meant a compound in which the amine-group is directly coupled to an aliphatic chain. With aromatic amine is meant a compound in which the amine group is directly coupled to an aromatic ring structure. The aliphatic diamines also include cycloaliphatic diamines such as for example piperazine. Examples of suitable aliphatic diamines include for example isophorondiamine, 1,2-ethylenediamine, 1,3-propylenediamine, 1,6-hexamethylenediamine, 1,12-dodecylenediamine, 1,4 cyclohexanebismethylamine, piperazine, p-xylylenediamine and/or m-xylylenediamine. The amine component may also comprise branching components to obtain branched polyamides. Suitable examples include for example di-alkylene-triamines such as for example di-ethylenetriamine, di-alkylene-tetramines, di-alkylene- pentamines, di-hexamethylene-triamine, poly- functional acids such as for example 1,3,5-benzene tricarboxylic acid, trimellitic anhydride and pyromelitic anhydride and poly- functional amino acids such as for example aspartic acid and glutamic acid.

The anti-bridging agent may be added to the resin at any time but is preferably added during the resin synthesis or while the resin leaves the reactor. With "during the resin synthesis" is meant that the anti-bridging agent is added before the resin leaves the synthesis reactor. For example, the anti-bridging agent may be added while the resin synthesis is occurring or after the synthesis but before the resin leaves the reactor. Generally the resin will be partially or fully cooled down before it leaves the synthesis reactor. Preferably the resin is partially cooled down before leaving the reactor. The anti-bridging agent is preferably added to the resin while the resin is partly cooled down just before the resin leaves the reactor. With "just before the resin leaves the reactor" is meant the moment in time where the resin has already all predetermined properties and is more or less waiting to leave the reactor. Preferably the anti-bridging agent is added approximately 30 minutes preceding the resin leaving of the reactor.

Preferably the anti-bridging is added during the resin synthesis or while the resin leaves the reactor in which the resin is primarily produced. Alternatively, it may be added as separate component to the composition.

Additionally other components may be used in the resin composition, the powder coating composition and the powder paint composition according to the invention, for example flow control agents, catalysts, dispersants, light-stabilizers, biocides, and degassing agents.

Additional stabilizing additives may be used in the powder coating composition according to the invention. For example primary and / or secondary antioxidants, UV stabilizers for example quinones, (sterically hindered) phenolic compounds, phosphonites, phosphites, thioethers, HALS compounds (hindered amine light stabilizers) or aromatic amines can for example be used as stabilizers.

In an embodiment of the resin composition according to the invention the resin is a polyester resin.

In an embodiment of the resin composition according to the invention both the resin and the group Y of the anti-bridging agent consist for at least 50 w/w% of the same monomers.

This way the compatibility of the anti-bridging agent with the polymer is improved.

The monomers can be selected for at least 50 w/w% from the polyol and the polycarboxylic acid and the anhydrides as described herein under heading "POLYESTERS"

In an embodiment of the resin composition according to the invention both the resin and the group Y of the anti-bridging agent consist for at least 50 w/w % of the same monomers, which monomers are selected from the group consisting of neopentyl glycol, ethylene glycol, diethylene glycol, propylene glycol, trimethylolpropane, glycerol, terephthalic acid , isophthalic acid, orthophthalic acid, adipic acid, succinic acid and trimellitic anhydride.

Alternatively, the monomers can be selected for at least 50 w/w % from the acrylate monomers as described herein under heading "POLYACRYLATES".

Alternatively, the monomers can be selected for at least 50 w/w % from the diamine monomers and dicarboxylic acid monomers as described herein under the heading "POLYAMIDES".

The invention is further related to a powder coating composition. The powder coating composition according to the invention comprises

-      at least one resin suitable for use in a powder paint composition,
-      at least one anti-bridging agent according to the invention
-      and a crosslinker.

Preferably the resin composition is present in the powder coating composition in an amount of 50 to 99 parts by weight and preferably the amount of the crosslinker present in the powder coating composition is 1 to 50 parts by weight, wherein the sum of the amount of the resin composition and the crosslinker is 100 parts by weight.

The amount of the anti-bridging agent in the powder paint composition is preferably at least about 0.01 w/w %, more preferably at least about 0.1 w/w %, even more preferably at least about 0.3 w/w %, even more preferably still at lest about 0.5 w/w % based on the total powder paint composition. The amount of anti-bridging agent is preferably about 15 w/w % or less, more preferably about 10 w/w % or less, even more preferably about 5 w/w % or less based on the total powder paint composition.

The present powder coating compositions comprise a crosslinker. Any crosslinker or mixture of crosslinkers that is suitable for use (i.e. reactive with) with the resin may be used herein. Various types of crosslinkers or mixtures of crosslinkers may be used herein. Classes of suitable crosslinkers include epoxy resins, polyamides, (blocked) isocyanates, amino resins, polycarboxylic acids, acid anhydrides, polyphenols, a crosslinker comprising β-hydroxyalkylamide units (e.g. Primid®-like compounds), and combinations thereof. Examples of suitable compounds include triglycidylisocyanurate (TGIC), polyisocyanates (for example caprolactam blocked IPDI (isophorone diisocyanate) derivatives, uretidione of IPDI, TDI (toluene diisocyanate) derivatives, TMXDI (tetramethylxylene diisocyanate) derivatives, or trimers thereof), polyphenols (for example polyphenols of the resol or novolac type), amino resins (for example alkylated melamine or benzoguanimine resins), alkylated melamine such as hexamethoxy-methylmelamine (HMMM), tryglycidil trimillitate, epoxidized vegetable oil such as epoxidized linseed oil and bisphenol A based epoxy resins, benzoguanamine (derivative), and combinations thereof.

It may be necessary to cure the composition comprising resin and crosslinker in order to form the coating. Examples of curing processes include thermal curing, curing with electromagnetic radiation, such as for example UV- or electron beam curing. Depending on the nature of the functional groups it is also possible to use two (dual-cure) or more types of curing processes.

The powder coating composition according to the present invention is preferably a solid composition having a glass transition temperature (Tg) between 20 °C and 200 °C. With solid is here and hereinafter meant a compound that is solid at room temperature with the common range of 18 °C to 23°C, at atmospheric pressure usually about 1 bar. A Tg of less than 20° C gives less physical and /or chemical stability of the system and a Tg more than 200°C results in a composition which is more difficult to process. More preferably the $T_g$ is between 40° C and 100° C because this range results in a good combination of chemical stability and processability of the composition.

More preferably the Tg of the powder coating composition is higher than 45 °C, more preferably the Tg is above 50 °C. Generally, the higher the Tg, the better the physical stability such as powder stability.

A glass transition temperature (Tg) of at least about 40 °C typically results in a stable powder suitable for storage under most common conditions.

Additionally a high Tg is advantageous because it usually leads to increased hardness of the final coating. The Tg may be measured by differential scanning calorimetry (DSC) at a scan rate of 5 °C/min.

In an embodiment of the powder coating composition according to the invention the crosslinker comprises β-hydroxyalkylamide units.

Surprisingly the use of the anti-bridging agent reduces yellowing of a composition comprising a crosslinker comprising β-hydroxyalkylamide units under elevated heat conditions. Examples, of elevated heat conditions include a heat overshoot during curing such as a temporary heat peak, or prolonged exposure to curing conditions for instance due to a problem with a curing oven causing the article to remain in the hot oven longer than planned.

The reduced yellowing can be measured using a heat stability test described herein.

Colour values referred to in this application are values measured using CIE 1976 L, a\*, b\* colour values (C.I.E.: International Commission on Illumination).
b\* is a measure for yellowness: the higher (more positive value for) b\* the more yellow the colour of a surface measured is. A smaller delta b\*(db\*) indicates less yellowing occurred.

In case the coating obtained with a powder coating composition comprising a white pigment such as TiO2 a higher delta E value corresponds to a less white colour.

Suitable examples of β-hydroxyalkylamide crosslinkers are described in EP 0322 834 B1 p2, lines 12-36. A suitable commercially available β-hydroxyalkylamide crosslinker is for example N,N,N',N'-tetrakis-(2-hydroxyethyl)-adipamide (Primid® XL-552).

The composition according to this embodiment of the invention preferable comprises a polymer (resin) comprising functional groups capable of reacting with a β-hydroxyalkylamide unit.

The polymer comprising polymer functional groups capable of reacting with a β-hydroxyalkylamide unit may be any polymer comprising functional groups capable of reacting with a β-hydroxyalkylamide unit. Functional groups capable of reacting with a β-hydroxyalkylamide unit include carboxylic acid functional groups isocyanurates, anhydrides, preferably a carboxylic acid functional group is used.

Examples of suitable polymers comprising polymer functional groups capable of reacting with a β-hydroxyalkylamide unit include but are not limited to acid functional polymers, wherein the polymer is selected from a group comprising polyester, polyacrylate, polyamide, polyimide, polyurethane and polycarbonate, and copolymers thereof such as polyester-polyimide copolymer and polyester-polyamide copolymer. Preferably, the polymer comprising polymer functional groups capable of reacting with a β-hydroxyalkylamide unit is selected from the group consisting of polyester, polyacrylate, polyurethane and polycarbonate.

Suitable polyesters comprising the functional groups capable of reacting with a β-hydroxyalkylamide unit may be based for example on a condensation reaction between a linear aliphatic, branched aliphatic and cyclo-aliphatic polyols and an aliphatic, cyclo-aliphatic and/or aromatic poly carboxylic acids or its anhydrides. The ratio of polyol and acids or anhydrides is preferably such that there is an excess of acid or anhydride over alcohol so as to form a polyester which has free carboxylic or anhydride groups.

The invention is further related to a use of the anti-bridging agent according to the invention as anti-yellowing agent in a powder coating composition comprising

- a crosslinker having β-hydroxyalkylamide units,
- and a polymer comprising functional groups capable of reacting with a β-hydroxyalkylamide unit.

The use according to the invention provides the desired effect of reduced yellowing if the anti-bridging agent is applied in powder coating composition or powder paint composition comprising

- a crosslinker having β-hydroxyalkylamide units,
- and a polymer comprising functional groups capable of reacting with a β-hydroxyalkylamide unit.

The invention further relates to a powder paint composition comprising. The powder paint composition according to the invention comprises

- the powder coating composition according to the invention and
- at least 5 w/w % of pigment or a combination of a pigment and a filler wherein the sum of the pigment and the filler is at least 5 w/w % based on the total composition.

As used herein, 'pigment' includes pigmented fillers, extenders and colorants.

While not wishing to be bound by theory, it is believed that the problems seen in high pigment loaded powder coating compositions are not caused by insufficient dispersion of the pigment particles as generally believed. Indeed, surprisingly the present inventors have found that the pigment dispersion is generally good which makes the powder coating composition susceptible to interactions between the resin and the pigment particles whereby the binder resin molecules bridge the pigment particles. In particular, it is believed that the long wave roughness plays an important role in determining the appearance characteristics of the coating.

The pigment for use herein can be of an inorganic or organic nature. As used herein "pigment" means a substance consisting of particles which impart colour to the composition. Pigments suitable for use in the present compositions include, for example, white pigments, pearlescent pigments, coloured pigments, black pigments, special effect pigments, and fluorescent pigments. Preferred pigments for use herein are inorganic. Preferred pigments for use herein include titanium oxides, zinc sulphides, zinc phosphates, iron oxides, zinc oxides, chromium oxides, silicas, radium sulphates, calcium carbonates, and combinations thereof. More preferably the pigment herein comprises titanium dioxide.

Examples of commercially available pigments suitable for use herein include Kronos™ 2160, 2340, 2315, 3645, 2222, 2305 (available from Kronos); Ti-Pure™ 706, 960 (available from Du Pont™); Tiona 595 (available from Millennium™); Lithophone™ 30%; and combinations thereof.

Examples of fillers suitable for use herein include $CaCO_3$, $BaSO_4$, $Al(OH)_3$ and silica.

It will be clear to the person skilled in the art that some fillers may also be used as pigment and vice versa, for example $CaCO_3$ can be used both as pigment and as filler.

Preferred fillers for use herein are inorganic fillers.

In an aspect of the powder paint composition according to the invention, the composition further comprises at least 10 w/w % of pigment or a combination of a pigment and a filler wherein the sum of the pigment and the filler is at least 10 w/w % based on the total composition.

In an aspect of the powder paint composition according to the invention, the composition comprises at least 15 w/w % of pigment or a combination of a pigment and a filler wherein the sum of the pigment and the filler is at least 15 w/w % based on the total composition.

In an aspect of the powder paint composition according to the invention, the composition comprises at least 20 w/w % of pigment or a combination of a pigment and a filler wherein the sum of the pigment and the filler is at least 20 w/w % based on the total composition.

In an aspect of the powder paint composition according to the invention, the composition comprises at least 30 w/w % of pigment or a combination of a pigment and a filler wherein the sum of the pigment and the filler is at least 30 w/w % based on the total composition.

In an embodiment of the powder paint composition according to the invention, the composition comprises at least 40 w/w % of pigment or a combination of a pigment and a filler wherein the sum of the pigment and the filler is at least 40 w/w % based on the total composition.

In an aspect of the powder paint composition according to the invention, the composition comprises at least 45 w/w % of pigment or a combination of a pigment and a filler wherein the sum of the pigment and the filler is at least 45 w/w % based on the total composition.

In an aspect of the powder paint composition according to the invention, the composition comprises at least 50 w/w % of pigment or a combination of a pigment and a filler wherein the sum of the pigment and the filler is at least 50 w/w % based on the total composition.

In an aspect of the powder paint composition according to the invention, the composition comprises 90 w/w % or less of pigment or a combination of a pigment and a filler wherein the sum of the pigment and the filler is 90 w/w % or less based on the total composition.

In an aspect of the powder paint composition according to the invention, the composition comprises 75 w/w % or less of pigment or a combination of a pigment and a filler wherein the sum of the pigment and the filler is 75 w/w % or less based on the total composition.

In an aspect of the powder paint composition according to the invention, the composition comprises 60 w/w % or less of pigment or a combination of a pigment and a filler wherein the sum of the pigment and the filler is 60 w/w % or less based on the total composition.

The powder paint composition according to the composition may for example comprise 15 w/w % pigment and 10 w/w % filler based on the total powder paint composition.

In an aspect the powder paint composition according to the invention the composition comprises in addition to the crosslinker, the polymer and the anti-bridging agent 30 w/w % TiO2 and 10 w/w % CaCO3 based on the total powder paint composition.

The powder paint composition according to the composition may for example comprise 30 w/w % pigment and 10 w/w % filler based on the total powder paint composition.

The level of filler may be increased so less resin can be used while still an acceptable coating is obtained. For example to reduce cost. For example 35 w/w % TiO2 and 20 w/w % CaCO3 based on the total powder paint composition or 33 w/w % TiO2 and 20 w/w % BaSO4 based on the total powder paint composition.

In an aspect of the invention a powder paint composition is provided comprising

- a polymer comprising functional groups capable of reacting with a β-hydroxyalkylamide unit,
- a crosslinker comprising β-hydroxyalkylamide units,
- at least one anti-bridging agent.
- at least 10 w/w % of a filler based on the total composition

An advantage of a coating made from a powder paint composition according to the invention may be a reduced yellowing.

The invention is further related to a process for manufacturing a coated substrate comprising the steps of

- providing a substrate,
- applying the composition according to the invention on the substrate to obtain an at least partly covered substrate,
- curing the composition on the at least partly covered substrate.

It may be necessary to cure the composition comprising the polymer and the crosslinker in order to form the coating. Examples of curing processes include thermal curing, curing with electromagnetic radiation, such as for example UV- or electron beam curing. Depending on the nature of the functional groups it is also possible to use two (dual-cure) or more types of curing processes.

Examples of suitable materials for substrates include metals, (galvanized) steel, cast iron, aluminium, other metal alloys, glass, ceramics, wood, fibre board such as MDF (medium density fibre board), bricks, plastic, composite and combinations thereof.

The substrate may for example be at least a part of: a piece of garden furniture, a can, a piece of coil, a door, a door frame, a window frame, a heater, a piece of office furniture, a building panel or a building frame.

The invention is further related to a fully or partly coated substrate comprising a coating based on a composition according to the invention, which composition is fully or partially cured.

An improved outdoor resistance of the resultant powder coating may be demonstrated by a longer time lapsed until 50 % of retention of gloss at 60° in a QUV-B exposure test, preferably according to according to ASTM G53-88.

In an embodiment of the coated substrate according to the invention the coating has an average thickness of 50 $\mu$m or less and a coverage thickness of 50 $\mu$m or less.

As used herein, the term "coverage thickness" refers to the minimum thickness at which a particular coating composition provides sufficient pigment coverage to hide the substrate. Coverage thickness can be measured by preparing a standard aluminium test panel with a black coloured band of 2 cm width from top to bottom. The powder coating composition is applied to the panel so that there is a gradient in layer thickness from about 20 $\mu$m at the top to about 80 $\mu$m at the bottom.

The coating is assessed in order to determine the point at which the black band is no longer visible. The thickness at this point is the coverage thickness. The coatings of the present invention preferably have a coverage thickness of 60 $\mu$m or less, more preferably 50 $\mu$m or less, even more preferably 45 $\mu$m or less.

In an embodiment of the coated substrate according to the invention the coating the coating has a long wave roughness of 0.8 $\mu$m or less.

As used herein, the term "long wave roughness" refers to the root mean square roughness Rq of the coating surface determined from the topological features with a spatial wavelength of more than 5 micrometers. Long wave roughness may be measured by scanning the surface topography of the coated panels with a white light interferometer and 'low-pass' Fourier filtering of the measured surface as described in detail in the experimental section. The coatings herein preferably have a long wave roughness of 0.8 $\mu$m of less. Preferably, the coatings herein have a long wave roughness of 0.75 $\mu$m, more preferably 0.7 $\mu$m, even more preferably 0.65 $\mu$m or less. It has surprisingly been found that coatings with lower long wave roughness show improved 20° gloss and lower haze.

As used herein, the term "short wave roughness" refers in a similar way to the root mean square roughness Rq of the coating surface determined from the topological features with a spatial wavelength of less than 5 micrometers. As described in e.g. Hunt et al, J. Coat. Technol. Vol. 70, No. 880, p45, (1998) this short wave roughness is known to be related to the quality of the pigment dispersion and to have a large effect on the optical properties of the cured coating like gloss and haze. For this reason, dispersants are sometimes used to improve the dispersion of the pigment particles in the powder paint.

The coatings herein preferably have a thickness of 80 $\mu$m or less, more preferably 60 $\mu$m or less, even more preferably 50 $\mu$m or less.

The coatings herein preferably have a gloss at 20° of 60 or better, more preferably of 70 or better, more preferably of 80 or better (as measured by Byk Gardner haze-gloss meter at a layer thickness of 60 $\mu$m).

The coatings herein preferably have a haze of 300 or less, preferably 250 or less, more preferably of 150 or less, more preferably of 100 or less (as measured by Byk Gardner haze-gloss meter at a layer thickness of 60 $\mu$m).

Weather-o-meter (WOM) tests have been performed on the coatings according to the invention. Preferably the WOM test is performed according to ISO 11341. Alternatively so-called Florida natural weathering standard testing can be used to establish the influence of outdoor conditions on a coating.

Q UV-A and Q UV-B tests have been performed on the coatings according to the invention. Preferably the Q UV-A and Q UV-B tests are performed according to ASTM G53-88.

Preferably a compositions comprising resin, pigment, and anti-bridging agent have a stable viscosity at 200 °C. That is, the anti-bridging agent reduces the amount by which the viscosity of a composition comprising resin and pigment changes when compared to a similar composition without the agent. As used herein, "stable viscosity" means that the once the composition is heated to 200 °C the viscosity changes by less than 25% over the course of 10mins, more preferably by less than 10% over the course of 10mins. The stability of the viscosity of the compound without a crosslinker was verified on a stress-controlled rheometer (MCR300, Paar-Physica) by applying a constant shear stress of 1 Pa for 1 hour. All measurements were performed at 200 °C and under a nitrogen atmosphere, using a parallel plate geometry (diameter and gap of respectively 25 mm and 1.5 mm) in shear.

The invention is further related to a crosslinker composition comprising

- at least one crosslinker and
- at least one anti-bridging agent according to the invention.

The crosslinker composition according to the invention provides when used in combination with a resin capable of reacting with the crosslinker to form a powder paint composition or a powder coating composition the desired effect of at least partially overcoming a drawback of a reduction of powder stability such composition.

The invention further relates to a coated pigment particle coated with an anti-bridging agent according to the invention.

The invention further relates to a coated filler particle coated with an anti-bridging agent according to the invention.

The anti-bridging agent may be coated onto pigment or onto filler particles prior to compounding such particles into the resin. The coated filler particle or coated pigment particle thus obtained - when used in a powder paint composition - leads to acceptable powder stability.

In one aspect, the invention relates to use of a resin composition according to the invention in a powder paint composition.

The invention will further be elucidated by the following, non-limiting examples.

EXPERIMENTAL SECTION

The anti-bridging was prepared analogous to the synthesis as described in CA 2,300,990.

1) In an embodiment of the anti-bridging agent the group Y was made from neopentyl glycol and terephthalic acid, the group X was -O-PO2H2 (derived from phosphoric acid) and the Mn was 1888 , n= 1 and m=1 and the Tg was 45 °C.

2) In an embodiment of the anti-bridging agent the group Y was made from neopentyl glycol and terephthalic acid, the group X was -O-PO2H2 (derived from phosphoric acid) and the Mn was 1245 g /mol, n= 1 and m=1 and the Tg was 35 °C.

3) In an embodiment of the anti-bridging agent the group Y was made from neopentyl glycol and terepthalic acid, the group X was -O-PO2H2 (derived from phosphoric acid) and the Mn was 1766 g /mol, n= 1 and m=1 and the Tg was 45 °C.

4) In an embodiment of the anti-bridging agent the group Y was made from neopentyl glycol and terepthalic acid, the group X was -O-PO2H2 (derived from phosphoric acid) and the Mn was 2067 g /mol, n= 1 and m=1 and the Tg was 56 °C.

5) In an embodiment of the anti-bridging agent the group Y was made from neopentyl glycol and terephthalic acid, the group X was -O-PO2H2 (derived from phosphoric acid) and the Mn was 2347 g /mol, n= 1 and m=1 and the Tg was 62 °C.

6) In an embodiment of the anti-bridging agent the group Y is made from neopentyl glycol and isophthalic acid, the group X is -O-PO2H2 (derived from phosphoric acid) and the Mn is in a range from 1200 to 5000 g /mol, n= 1 and m=1.

7) In an embodiment of the anti-bridging agent the group Y was made from neopentyl glycol and terephthalic acid 7,5 mol % and adipic acid (based on the total amount of acids) the group X is -O-PO2H2 (derived from phosphoric acid) and the Mn is in a range from 1200 to 5000 g /mol, n= 1 and m=1, and the Tg was 43 °C.

8) In an embodiment of the anti-bridging agent the group Y is made from neopentyl glycol and propylene glycol and isophthalic acid the group X is -O-PO2H2 (derived from phosphoric acid) and the Mn is in a range from 1200 to 5000 g /mol, n= 1 and m=1.

9) In an embodiment of the anti-bridging agent the group Y is made from neopentyl glycol and ethylene glycol and isophthalic acid the group X is -O-PO2H2 (derived from phosphoric acid) and the Mn is in a range from 1200 to 5000 g /mol, n= 1 and m=1.

10) In an embodiment of the anti-bridging agent the group Y is made from neopentyl glycol and ethylene glycol and terephthalic acid the group X is -O-PO2H2 (derived from phosphoric acid) and the Mn is in a range from 1200 to 5000 g /mol, n= 1 and m=1.

11) In an embodiment of the anti-bridging agent the group Y is made from neopentyl glycol and propylene glycol and terephthalic acid the group X is -O-PO2H2 (derived from phosphoric acid) and the Mn is in a range from 1200 to 5000 g /mol, n= 1 and m=1.

12) In an embodiment of the anti-bridging agent the group Y was made from neopentyl glycol and terephthalic acid, the group X was the ester of Sulfamine acid and the Mn was in de range of 1200 - 4000 , n= 1 and m=1.

13) In an embodiment of the anti-bridging agent the group Y was made from neopentyl glycol and terephthalic acid, the group X was the ester of Boric acid and the Mn was in the range of 1200 - 4000, n= 1 and m=1 and the Tg was 66 °C.

14) In an embodiment of the anti-bridging agent the group Y is made from neopentyl glycol and terephthalic acid the group X is the ester of sulphonic acid and the Mn is in a range from 1200 to 5000 g /mol, n= 1 and m=1.

15) In an embodiment of the anti-bridging agent the group Y was made from neopentyl glycol and terephthalic acid the group X was the ester of HET acid and the Mn was in a range from 1200 to 5000 g /mol, n= 1 and m=1 and the Tg was 54 °C

16) In an embodiment of the anti-bridging agent the group Y is made from neopentyl glycol and isophthalic acid the group X is the ester of HET acid and the Mn is in a range from 1200 to 5000 g /mol, n= 1 and m=1.

17) In an embodiment of the anti-bridging agent the group Y was made from neopentyl glycol and terephthalic acid the group X was the ester of methane sulfonic acid and the Mn was in a range from 1200 to 5000 g /mol, n= 1 and m=1 and the Tg was 41 °C .

18) In an embodiment of the anti-bridging agent the group Y is made from neopentyl glycol and trimethylol propane and isophthalic acid the group X is $-O-PO_2H_2$ (derived from phosphoric acid) and the Mn is in a range from 1200 to 5000 g /mol, n= 1 and m=1.

19) In an embodiment of the anti-bridging agent the group Y is made from neopentyl glycol and trimethlol propane and terephthalic acid the group X is $-O-PO_2H_2$ (derived from phosphoric acid) and the Mn is in a range from 1200 to 5000 g /mol, n= 1 and m=1.

20) In an embodiment of the anti-bridging agent the group Y is made from neopentyl glycol and diethyleneglycol and isophthalic acid the group X is $-O-PO_2H_2$ (derived from phosphoric acid) and the Mn is in a range from 1200 to 5000 g /mol, n= 1 and m=1.

21) In an embodiment of the anti-bridging agent the group Y is made from glycerol and neopentyl glycol and isophthalic acid the group X is $-O-PO_2H_2$ (derived from phosphoric acid) and the Mn is in a range from 1200 to 5000 g /mol, n= 1 and m=1.

22) In an embodiment of the anti-bridging agent the group Y is made from neopentyl glycol and propylene glycol and ethylene glycol and isophthalic acid the group X is $-O-PO_2H_2$ (derived from phosphoric acid) and the Mn is in a range from 1200 to 5000 g /mol, n= 1 and m=1.

Uralac® P770 (available from DSM Resins, Zwolle, NL) was mixed with the ingredients listed in Table 1 in a pre-mixer (Kinematica Blender Microtron MB550), homogenised and then extruded in a double screw Prism extruder (Prism TSE 16 TSE (200 rpm, 120 °C) and sieved (retsch vibro (90 $\mu$m) to a powder with particle size less than 90 $\mu$m. The process was repeated with a similar amount of the base resin of Uralac® P770 which did not contain the anti-bridging agent.

Table 1: powder paint compositions

|   | Uralac P 770 | Base resin without anti-bridging agent | K216 0 | GT-7004 | Resiflow PV-5 | Benzoin |
|---|---|---|---|---|---|---|
|   | Parts | Parts | parts | parts | parts | parts |
| A | 93 |  | 154.2 | 57 | 3 | 1.1 |
| B |  | 93 | 154.2 | 57 | 3 | 1.1 |

The powders were sprayed electrostatically on an aluminum substrate (AL-46). The coated substrates were cured for 10 minutes at 200 °C.

DETERMINATION OF THE LONG WAVE ROUGHNESS

The surface topography of the coated panels was scanned using a white light interferometer (Wyco NT1100 from Veeco Instruments). All experiments were done using a lens and an objective with a magnification of respectively x0.5 and x5. This combination allows measurement of a surface of 2.4mm by 1.8 mm during a single scan. The surface of each coated panel was measured at 5 different positions to ensure a representative characterization of the global topography.

In order to determine the small and long wave roughness of the measured surface, the raw data were further analyzed using the Veeco software (Vision v3.6 for NT1100). First, the Fourier decomposition of the measured surface into its component spatial frequencies was determined. In a second step, the small and the long wave roughness were extracted by removing the unwanted frequencies with respectively a high pass and a low pass Gaussian filter and reconstructing the image. A fixed value of 20 mm$^{-1}$ for the digital cutoff frequency was used for all the different surface scans. The value of the root means square roughness Rq (calculated as the average between the height deviations and the mean line/surface, taken over the evaluation length/area) of the filtered surfaces was used to characterize the level of small or long wave roughness.

Haze and Gloss properties of the cured powder coatings are measured with a Byk Gardner haze-gloss meter at a layer thickness of 60 $\mu$m.

The results are shown in Table 2.

Table 2: Coating Properties

|   | Rq (long) $\mu$m | Rq (short) nm | Haze | Gloss 20° |
|---|---|---|---|---|
| A | 0.53 | 29.6 | 106 | 85.6 |
| B | 1.92 | 38.2 | 533 | 33.9 |

As can be seen from table 2, a coating with an anti-bridging agent has a higher gloss at 20° and a lower haze.

Uralac® P770 (available from DSM Resins, Zwolle, NL) is mixed with the ingredients listed in Table 3 and in table 5 in a pre-mixer (Kinematica Blender Microtron MB550), homogenized and extruded in a double screw Prism extruder (Prism TSE 16 TSE (200 rpm, 120 °C) and sieved (retsch vibro (90 $\mu$m) to a powder with a particle size of less than 90 $\mu$m. The process is repeated with a similar amount of the base resin of Uralac® P770 which does not contain the anti-bridging agent.

Table 3: powder paint compositions

|   | Uralac P 770 | Base resin without anti-bridging agent | GT 7004 | K2310 | K2310 | Durcal 2 | Durcal 2 | Resiflow PV-5 | Benzoin |
|---|---|---|---|---|---|---|---|---|---|
|   | parts | Parts | parts | parts | w/w % | parts | w/w % | parts | parts |
| I | 138 |  | 59 | 99 | 33 | 0 | 0 | 3 | 1.5 |
| IR |  | 138 | 59 | 99 | 33 | 0 | 0 | 3 | 1.5 |
| II | 116 |  | 50 | 99 | 33 | 31 | 10 | 3 | 1.2 |
| IIR |  | 116 | 50 | 99 | 33 | 31 | 10 | 3 | 1.2 |

Araldite ® GT 7004 is an epoxy type crosslinker obtainable from Huntsman.

Kronos ® 2310 (K231 0) is TiO2 obtainable from Kronos.

Durcal ® 2 is CaCO3 obtainable from Omya.

Resiflow PV-5 is a flow additive obtainable from Worlee ® Chemie Gmbh.

Benzoin is a degassing agent obtainable from Caffaro SpA Italy.

The powder coating compositions I, IR, II and IIR were sprayed electrostatically on a steel substrate (S-46). The coated substrates were cured for 10 minutes at 200 °C. The coatings had a thickness of 60 $\mu$m.

Haze and Gloss properties of the cured powder coatings are measured with a Byk Gardner haze-gloss meter at a layer thickness of 60 $\mu$m. The flow was determined visually compared to PCI-panels and is rated with a higher value between 1-10, with 10 = best.

The results are shown in table 4.

Table 4 Coasting properties

|   | Flow | Haze | Gloss 20° | Gloss 60° |
|---|---|---|---|---|
| I | 7 | 31 | 92.2 | 97.8 |
| IR | 6 | 40.8 | 90.9 | 97.6 |
| I | 6.75 | 287 | 60.5 | 88.4 |
| IIR | 3 | 305 | 57.5 | 87.6 |

As van be seen from table 4 above a coating with anti-bridging agent (I, II) has a better flow, a lower haze value and better gloss as compared to a coating without anti-bridging agent (IR, IIR).

Table 5: powder paint compositions

| | Uralac P 770 | Base resin without anti-bridging agent | GT 7004 | K2310 | K2310 | Blanc Fix Micro | Blanc Fix Micro | Resiflow PV-5 | Benzoin |
|---|---|---|---|---|---|---|---|---|---|
| | parts | parts | parts | parts | w/w% | | w/w % | parts | parts |
| III | 173 | | 74 | 149 | 33 | 47 | 10 | 4.4 | 1.9 |
| IIIR | | 173 | 74 | 149 | 33 | 47 | 10 | 4.4 | 1.9 |
| IV | 142 | | 61 | 152 | 33 | 91 | 20 | 4.4 | 1.5 |
| IVR | | 142 | 61 | 152 | 33 | 91 | 20 | 4.4 | 1.5 |
| Blanc Fix ® Micro is BaSO4 obtainable from Sachtleben | | | | | | | | | |

The powder coating compositions III, IIIR, IV and IVR were sprayed electrostatically on a steel substrate (S-46). The coated substrates were cured for 10 minutes at 200 °C. The coatings had a thickness of 40 $\mu$m.

Haze and Gloss properties of the cured powder coating compositions are measured with a Byk Gardner haze-gloss meter at a layer thickness of 40 $\mu$m. The results are shown in table 6.

The flow was determined visually compared to PCl-panels and is rated with a higher value between 1-10, with 10 = best.

Table 6 Coating properties

| | Flow | Haze | Gloss 20° | Gloss 60° |
|---|---|---|---|---|
| III | 8 | 34.7 | 93.1 | 98.4 |
| IIIR | 4 | 67.3 | 86.2 | 96.5 |
| IV | 7 | 49.7 | 89.2 | 97.2 |
| IVR | 1 | 67.3 | 86.2 | 96.5 |

As can be seen from table 6 above, a coating with anti-bridging agent (III, IV) has a better flow, a lower haze value and a better gloss as compared to a coating without anti-bridging agent (IIIR, IVR).

The ingredients listed in Table 7 were mixed in a pre-mixer (Kinematica Blender Microtron MB550), homogenised and extruded in a double screw Prism extruder (Prism TSE 16 TSE (200 rpm, 120 °C) and sieved (retsch vibro (90 $\mu$m) to a powder coating composition with particle size less than 90 $\mu$m.

The processes were performed with a portion of Uralac® P865 to which an anti-bridging agent according to embodiment 1 as described above in the experimental section was added and repeated with a similar amount of Uralac® P865 which does not contain the anti-bridging agent as a comparative example.

Table 7 powder paint compositions

| | Uralac P 865 comprising anti-briging agent | Uralac P 865 without anti-bridging agent | XL-552 | K2160 | K2160 | Resiflow PV-5 | Benzoin |
|---|---|---|---|---|---|---|---|
| | parts | parts | parts | parts | w/w% | parts | parts |
| V | 285 | | 15 | 210 | 40 | 5.1 | 1.4 |
| VR | | 285 | 15 | 210 | 40 | 5.1 | 1.4 |

Uralac P865 is a carboxylated polyester powder coating resin suitable for use with Primid® XL-552 and having the following characteristics: Acid Value 33-37, Viscosity 15-30 dPa.s, Tg about 56 °C. Uralac ® P865 was obtained from DSM N.V.

Primid ® XL-552 is a $\beta$ hydroxyalkylamide crosslinker obtainable from EMS-chemie A.G., Switzerland.

Kronos ® 2160 (K 2160) is a TiO2 pigment obtainable from Kronos Europe.

Resiflow PV-5 is a flow additive obtainable from Worlee Chemie Gmbh.

Benzoin is a degassing agent obtainable from Caffaro SpA Italy.

The powder coating compositions V and VR were sprayed electrostatically on an aluminum substrate (AL-46). The coated substrates were cured for 10 minutes at 180 °C. The coatings had a thickness of 60 μm. Haze and Gloss properties of the cured powder coatings are measured with a Byk Gardner haze-gloss meter at a layer thickness of 60 μm. The results are shown in table 8. The flow was determined visually compared to PCI-panels and is rated with a higher value between 1-10, with 10 = best.

Table 8 Coating properties

|    | Flow | Haze | Gloss 20° | Gloss 60° |
|----|------|------|-----------|-----------|
| V  | 6    | 29   | 87        | 94        |
| VR | 5    | 80   | 82        | 94        |

As can be seen from table 8, a coating with anti-bridging agent (V) shows a better flow, a lower haze value and better gloss at 20oC, than the coating without anti-bridging agent (VR).

A QUV-B exposure test was performed according to ASTM G 53-88 on the coatings obtained from compositions V and VR.

The time lapsed until 50% of retention of gloss at 60° was longer for coating V than for the comparative VR.

The ingredients listed in Table 9 and in Table 10 were mixed in a pre-mixer (Kinematica Blender Microtron MB550), homogenised and extruded in a double screw Prism extruder (Prism TSE 16 TSE (200 rpm, 120 °C) and sieved (retsch vibro (90 μm) to a powder coating composition with particle size less than 90 μm.

The processes were performed with a portion of Uralac® P865 to which 4% anti-bridging agent according to embodiment 1 as described in the experimental section above was added [EX] and repeated with a similar amount of Uralac® P865 which does not contain the anti-bridging agent [C-EX] as a comparative example.

Table 9 powder paint compositions

| *      | EX    | C-EX  | XL-552 | K2160 | K2160 | Resiflow PV-5 | Benzoin |
|--------|-------|-------|--------|-------|-------|---------------|---------|
|        | parts | parts | parts  | parts | w/w % | parts         | parts   |
| VI     | 380   |       | 20     | 133   | 25    | 5.3           | 1.5     |
| C-VI   |       | 380   | 20     | 133   | 25    | 5.3           | 1.5     |
| VII    | 333   |       | 17.5   | 175   | 33    | 5.3           | 1.5     |
| C-VII  |       | 380   | 20     | 200   | 33    | 6             | 1.7     |
| V      | 285   |       | 15     | 210   | 40    | 5.1           | 1.4     |
| C-V    |       | 285   | 15     | 210   | 40    | 5.1           | 1.4     |
| VIII   | 285   |       | 15     | 250   | 45    | 5.5           | 1.5     |
| C-VIII |       | 285   | 15     | 250   | 45    | 5.5           | 1.5     |
| IX     | 238   |       | 12.5   | 250   | 50    | 5             | 1.4     |
| C-IX   |       | 285   | 15     | 300   | 50    | 6             | 1.7     |
| X      | 238   |       | 12.5   | 313   | 55    | 5.6           | 1.6     |
| C-X    |       | 285   | 15     | 375   | 55    | 6.75          | 1.9     |
| *) C-V is the comparative to V, C-VI is the comparative to VI etc. | | | | | | | |

Uralac ® P865 a carboxylated polyester commercially available as Uralac ® P825 (also known as a carboxylated polyester powder coating resin) suitable for use with a betahydroxy alkylamide crosslinker such as Primid® X-552 and having the following characteristics: Acid Value 33-37, Viscosity 15-30 dPa.s, Tg about 56 °C. Uralac ® P865 was obtained from DSM N.V.

Primid ® X-552 is a β hydroxyalkylamide crosslinker obtainable from EMS-chemie A.G., Switzerland.

Kronos ® 2160 (K 2160) is a TiO2 pigment obtainable from Kronos Europe.

Resiflow PV-5 is a flow additive obtainable from Worlee Chemie Gmbh.

Benzoin is a degassing agent obtainable from Caffaro SpA Italy.

The amount ( w/w %) of anti-bridging agent is based on the amount of polymer.

The amount ( w/w %) of TiO2 is based on the total composition.

The powder coating compositions were sprayed electrostatically on an aluminum substrate (AL-46). The coated substrates were cured for 10 minutes at 180 °C. The coatings had a thickness of 60 μm.

The flow was determined visually compared to PCI-panels and is rated with a higher value between 1-10, with 10 = best. The results are shown in table 11 and 12.

Haze and Gloss properties of the cured powder coatings are measured with a Byk Gardner haze-gloss meter at a layer thickness of 60 μm. The results are shown in table 11 and 12.

Outdoor resistance was determined by an QUV-B exposure test on the coatings obtained, the coatings were exposed to an exposure cycle (alternating 4 hrs UV-B at 50 °C, 4 hrs condensation at 40 °C). The time lapsed (hours) until 50% of retention of gloss at 60° is listed in table 11 and 12.

COLOUR

Colour values referred to in this application are values measured on the surface of the coating using CIE 1976 L, a*, b* colour values (C.I.E.: International Commission on Illumination). The colour values were measured according to DIN 6174 using a Dr.Lange Micro colour II apparatus.

HEAT STABILITY TEST

The substrates comprising one of the coatings obtained as described above were cut in two parts.

The first part was kept as reference. The second part was subjected to a heat stability test by heating the cured panel for 60 minutes at 220 °C in an electric oven.

The colour of the coating on the first and the second part was measured as described above. The results are listed in table 11 and 12 below.

Colour change:

$$\text{delta } b^* = b^*_{\text{Cure + heat test}} - b^*_{\text{Cure}}$$

Colour change:

$$\text{delta } E = (L_{\text{Cure + heat test}} - L_{\text{Cure}})^2 + (a^*_{\text{Cure + heat test}} - a^*_{\text{Cure}})^2 + (b^*_{\text{Cure + heat test}} - b^*_{\text{Cure}})^2$$

As can be seen from table 11 below, a coating with anti-bridging agent (VI, VII, VIII, IX, X) has better flow, a flow haze value and comparable gloss as compared to a coating without an anti-bridging agent (C-VI, C-VII, CV-III, C-IX, C-X)

The time lapsed until 50% of retention of gloss at 60 is longer for the tested coatings according to the invention than for the comparative coatings. This is indicative for increased outdoor resistance.

As can be seen from table 12 below, a coating with anti-bridging agent (XI, XI I, XII I, XIV) has better flow, a lower haze value, a higher or similar gloss than a coating without anti-bridging agent (C-XI, C-XII, C-XIII, C-XIV).

As can be seen from the results of the heat stability test listed in tables 11 and 12, the delta b* of the coating according to the invention is less than the delta b* of comparative coating subjected to the same test. Thus the yellowing is reduced and the heat stability is improved

Table 10 powder paint compositions

| * | EX | C-EX | XL-552 | K2160 | Blanc Fix F | K2160 | blank Fix F | Resiflow PV-5 | Benzoin |
|---|---|---|---|---|---|---|---|---|---|
| | parts | parts | parts | parts | Parts | w/w % | w/w % | parts | parts |
| XI | 855 | | 45 | 495 | 72 | 33 | 5 | 14.7 | 3.9 |
| C-XI | | 855 | 45 | 495 | 72 | 33 | 5 | 14.7 | 3.9 |
| XII | 832 | | 44 | 525 | 158 | 33 | 10 | 15.8 | 4.2 |

(continued)

| * | EX | C-EX | XL-552 | K2160 | Blanc Fix F | K2160 | blank Fix F | Resiflow PV-5 | Benzoin |
|---|---|---|---|---|---|---|---|---|---|
| | parts | parts | parts | parts | Parts | w/w % | w/w % | parts | parts |
| C-XI | | 832 | 44 | 525 | 158 | 33 | 10 | 15.8 | 4.2 |
| XIII | 713 | | 38 | 510 | 225 | 33 | 15 | 15 | 4.2 |
| C-XIII | | 713 | 38 | 510 | 225 | 33 | 15 | 15 | 4.2 |
| XIV | 570 | | 30 | 525 | 324 | 33 | 20 | 14.4 | 3.9 |
| C-XIV | | 570 | 30 | 525 | 324 | 33 | 20 | 14.4 | 3.9 |
| *) C-XI is the comparative to XI etc. | | | | | | | | | |

The amount (w/w %) of $TiO_2$ (K2160) is based on the total composition.

Blanc Fix® F is $BaSO_4$ obtainable from Sachtleben.

The amount (w/w %) of $BaSO_4$ (Blanc Fix) is based on the total composition.

Table 11 Coating properties

| * | Flow | Haze | Gloss 20° | Gloss 60° | outdoor resistance # (hours) | Heat stability ##db* (a.u.) | Heat stability ### dE (a.u.) |
|---|---|---|---|---|---|---|---|
| VI | 7- | 19 | 91 | 97 | 392 | n.d. | n.d. |
| C-VI | 6+ | 22 | 92 | 98 | 297 | n.d. | n.d. |
| VII | 6+ | 25 | 89 | 96 | 362 | 2.3 | 2.3 |
| C-VII | 6 | 28 | 90 | 97 | 359 | 5.7 | 5.8 |
| V | 6 | 29 | 87 | 94 | 417 | 2.7 | 2.7 |
| C-V | 5 | 80 | 82 | 94 | 362 | 4 | 4.1 |
| VIII | 5.5 | 45 | 84 | 93 | 501 | 2.7 | 2.8 |
| C-VIII | 4.5 | 70 | 84 | 94 | 423 | 3.8 | 3.9 |
| IX | 5- | 55 | 81 | 91 | n.d. | 2.2 | 2.2 |
| C-IX | 4+ | 101 | 79 | 92 | n.d. | 2.5 | 2.6 |
| X | 4.5 | 190 | 66 | 87 | n.d. | n.d. | n.d. |
| C-X | 2 | 398 | 50 | 87 | n.d. | n.d. | n.d. |
| *) C-V is the comparative to V, C-VI is the comparative to VI etc. n.d.: not determined | | | | | | | |
| # time lapsed until 50% of retention of gloss at 60 (hours) | | | | | | | |
| ## difference in b* before and after 1 hr 220 °C | | | | | | | |
| ### difference in delta E before after 1 hr 220 °C | | | | | | | |

Table 12 Coating properties

| | Flow 60 micron | Haze | Gloss 20° | Gloss 60° | Heat stability ## db* (a.u.) | Heat stability ### dE (a.u.) |
|---|---|---|---|---|---|---|
| XI | 7- | 37 | 88 | 95 | 3.8 | 4 |
| C-XI | 5.5 | 56 | 87 | 96 | 8.3 | 9.2 |
| XII | 6.5 | 41 | 87 | 95 | 3.7 | 3.9 |
| C-XII | 4.5 | 81 | 84 | 95 | 7.5 | 7.9 |
| XIII | 6 | 46 | 85 | 93 | 4.3 | 4.4 |
| C-XIII | 2.5 | 158 | 76 | 95 | 8.2 | 8.8 |

(continued)

|  | Flow 60 micron | Haze | Gloss 20° | Gloss 60° | Heat stability ## db* (a.u.) | Heat stability ### dE (a.u.) |
|---|---|---|---|---|---|---|
| XIV | 6- | 45 | 83 | 92 | 6 | 6.3 |
| C-XIV | 1 | 459 | 45 | 89 | 8.4 | 8.9 |

In the following example the properties of coatings from powder paint compositions with different anti-bridging agents are compared. The results are presented in Table 13 below. To this end a "base paint composition" was used which comprises 92 parts Uralac P5170, 39 parts GT7004 crosslinker, 165 parts Kronos ® 2310 (55 wt%), 2.96 parts Resiflow PV-5 and 0.98 parts Benzoin. Uralac ® P5170 is a carboxylated polyesters commercially (also known as a carboxylated polyester powder coating resin) suitable for use with a epoxy resin cross linker such as Araldite® GT 7004. Uralac® P5170 has the following characteristics: Acid Value 32-38 mg KOH/g , Viscosity 18-35 Pa.s, Tg about 54°C. Uralac P 5263 has the following characteristics: Acid Value 48-58 mg KOH/g, Viscosity 10-40 Pa.s, Tg about 58 °C.

The "base paint composition" was used as comparative example (Blanc) for example XV (Blanc + 5 wt% anti-bridging agent of embodiment 12 as described above), for example XVI (Blanc + 5 wt% anti-bridging agent of embodiment 1 as described above), for example XVII (Blanc + 5 wt% anti-bridging agent of embodiment 13 as described above), and example XVIII (Blanc + 5 wt% anti-bridging agent of embodiment 7 as described above).

Table 13 Coating properties

|  | anti bridging agent | Flow | Haze | Gloss 20° | Gloss 60° |
|---|---|---|---|---|---|
| Blanc | - (none) | 1 | 397 | 48.9 | 85.4 |
| XV | embodiment 12 | 4 | 76.3 | 74.7 | 88.3 |
| XVI | embodiment 1 | 5 | 48.4 | 76.9 | 88.5 |
| XVII | embodiment 13 | 3 | 253 | 64.2 | 89.3 |
| XVIII | embodiment 7 | 5 | 192 | 84.4 | 96.9 |
| Blanc is comparative: no anti-bridging agent. | | | | | |

As can be seen from table 13 above, a coating with anti-bridging agent (XV, XVI, XVII, XVIII) shows a better flow, a lower haze value and a higher gloss A compared to a coating without anti-bridging agent (Blanc).

PREPARATION OF ANTI-BRIDGING AGENT COATED PIGMENT PARTICLES.

Pigment particles, in this case $TiO_2$ (K2160), were dispersed in an excess of tetrahydrofluoran (THF). The dispersion was continuously stirred by a means of a magnetic stirrer. After 30 minutes, 5 weight percent on the basis of the pigment of the anti-bridging agent, according to embodiment 1 of the experimental section as described above, was added to the dispersion. This mixture was then stirred for 24 hours, after which the THF was evaporated at room temperature. For example E-1, these particles were compounded into a commercial polyester P5070 using a midi-extruder at a ratio of 50/50. For example E-2, the particles, prior to compounding into the same polyester and at the same ratio, were given a thermal treatment for 16 hours at 150 °C in a nitrogen environment. The comparative example CE consists of unmodified $TiO_2$ particles (K2160) compounded in the same polyester (P5070) at the same ratio of 50/50.

In order to assess the effect of coating the pigment particles with the anti-bridging agent on the powder coating flow, the stability of the viscosity was measured after a stepwise increase of the temperature from 100 to 200 °C as indicated above. The results are summarized in table 14 below.

Table 14: Viscosity data of polyester resin (CE) and polyester resin comprising anti-bridging agent coated pigments (E-1 and E-2) of the viscosity measured after 150s (ETA 150s) and after 600s (ETA 600s).

|  | Eta150s [Pa.s] | Eta600s [Pa.s] | Eta600s/Eta150s [-] |
|---|---|---|---|
| Comparative example (CE) | 248 | 467 | 1.8 |
| example E-1 | 102 | 147 | 1.44 |
| example E-2 | 80 | 91 | 1.13 |

As can be observed in table 14, the viscosity of the powder coating containing the unmodified pigment particles is strongly increases with time and is significantly higher at all times than the powder coatings containing the anti-bridging agent coated pigment particles. The thermal treatment of the modified pigments resulted in the lowest and most stable viscosity of all three compounds (example E-2).

The viscosity of powder paint compositions A and B as described in Table 1 was measured using on a stress-controlled rheometer (MCR300, Paar-Physica) by applying a constant shear stress of 1 Pa for 1 hour. At time zero the temperature was increased from 100 to 200 °C at a rate of 35 °C/min. All measurements were performed under a nitrogen atmosphere, using a parallel plate geometry (diameter and gap of respectively 25 mm and 1.5 mm) in shear.

The obtained viscosity transient of the powder paint composition has a minimum value at a time, closely corresponding with the time at which the temperature reaches its highest value (in this case 200 °C). The values of the minimum viscosity, $\eta_{min}$, measured for the samples listed in table 1, are reported in table 15.

Table 15

|   | $\eta_{min}$ [Pa.s] |
|---|---|
| A | 142 |
| B | 524 |

The ingredients listed in Table 16 were mixed in a pre-mixer (Kinematica Blender Microtron MB550), homogenised and extruded in a double screw Prism extruder (Prism TSE 16 TSE (200 rpm, 120 °C) and sieved (retsch vibro (90 $\mu$m) to a powder coating composition with particle size less than 90 $\mu$m.

The processes were performed with a portion of the indicated resin (XIX to XXIV) to which the indicated amount w/w % of anti-bridging agent (AB) according to embodiment 1, as described in the experimental section above, was added and repeated with a similar amount of the same resin which does not contain the anti-bridging agent as a comparative example (C-XIX to C-XXIV).

Table 16 powder coating compositions

| | | XIX | C-XIX | XIX | C-XX | XXI | C-XXI | XXII | C-XXI | XXIII | C-XXIII | XXIV | C-XXIV |
|---|---|---|---|---|---|---|---|---|---|---|---|---|---|
| Uralac® P 770 | parts | 339 | | | | | | | | | | | |
| Base resin of Uralac® P 770 without anti-bridging agent | parts | | 339 | | | | | | | | | | |
| Uralac® P 5070 with 5wt% AB | parts | | | 339 | | | | | | | | | |
| Uralac® P 5070 | parts | | | | 339 | | | | | | | | |
| Uralac® P 5263 with 6wt% AB | parts | | | | | 290 | | | | | | | |
| Uralac® P 5263 | parts | | | | | | 290 | | | | | | |
| Uralac® P 865 with 4 wt% AB | parts | | | | | | | 461 | | | | | |
| Uralac® P 865 | parts | | | | | | | | 461 | | 190 | | 133 |
| Uralac® P 865 + 2wt% Disperbyk® 180 | parts | | | | | | | | | 190 | | 133 | |
| Araldite GT 7004 | parts | 145 | 145 | 145 | 145 | 194 | 194 | | | | | | |
| Primid® XL-552 | parts | | | | | | | 24 | 24 | 10 | 10 | 7 | 7 |
| K 2310 | parts | 405 | 405 | 405 | 405 | 406 | 406 | | | | | | |
| K 2160 | parts | | | | | | | 404 | 404 | 100 | 100 | 168 | 168 |
| Resiflow PV 5 | parts | 8.89 | 8.89 | 8.89 | 8.89 | 9 | 9 | 8.88 | 8.88 | 3 | 3 | 3.08 | 3.08 |
| Benzoin | parts | 3.63 | 3.63 | 3.63 | 3.63 | 3.6 | 3.6 | 2.48 | 2.48 | 0.833 | 0.8 | 0.56 | 0.56 |

Uralac ® P865 is a carboxylated polyester commercially (also known as a carboxylated polyester powder coating resin) suitable for use with a betahydroxy alkylamide crosslinker such as Primid® XL-552 and having the following characteristics: Acid Value 33-37 mg KOH/g, Viscosity 15-30 Pa.s, Tg about 56 °C.

Uralac ® P5070, P5263 are carboxylated polyesters commercially (also known as a carboxylated polyester powder coating resin) suitable for use with a epoxy resin cross linker such as Araldite® GT 7004. Uralac® P5070 has the following characteristics: Acid Value 32-38 mg KOH/g , Viscosity 18-35 Pa.s, Tg about 54 °C. Uralac P 5263 has the following characteristics: Acid Value 48-58 mg KOH/g, Viscosity 10-40 Pa.s, Tg about 58 °C.

Uralac® P865, Uralac® P5070 and Uralac® P5263 were obtained from DSM N.V.

Primid ® XL-552 is a β hydroxy alkylamide crosslinker obtainable from EMS-chemie A.G., Switzerland.

Araldite® GT 7004 is an epoxy resin obtainable from Huntsman

Kronos ® 2160 (K 2160) is a $TiO_2$ pigment obtainable from Kronos Europe.

Kronos ® 2310 (K 2310) is a $TiO_2$ pigment obtainable from Kronos Europe

Resiflow PV-5 is a flow additive obtainable from Worlee Chemie Gmbh.

Benzoin is a degassing agent obtainable from Caffaro SpA Italy.

The amount (w/w %) of anti-bridging agent is based on the amount of polymer.

The amount (w/w %) of $TiO_2$ is based on the total composition.

PHYSICAL POWDER STABILITY TEST

The physical powder stability of powder paint composition XIX was tested in order to see if the powder is not going to sinter (agglomerate) at certain temperatures and after a certain period of time.

Per test result listed in table 17 , 4 jars of 30 ml were filled with about 15 ml powder coating, closed and placed in a stability oven from Heraeus Instruments, type B 6030 at the indicated temperature for the indicated duration.

The jars were removed from the oven and cooled down to room temperature for minimal 1 hours. After that the powder condition and the powder stability was determined visually and rated as indicated below.

Rating: 1 to 10 with 1 very poor (Considerable compaction, one solid block) and 10 very good (complete free floating powder).

It is preferred that the powder paint composition has a stability of at least 6 after 2 weeks at 40 °C.

Table 17 Powder stability of powder paint composition XIX

| Powder coating | Oven Temperature | 1 day | 3 days | 1 week | 2 weeks |
|---|---|---|---|---|---|
| XIX | 30 °C | 9 | 9 | 9 | 9 |
| | 40 °C | 8 | 8 | 8 | 8 |
| C-XIX | 30 °C | 9 | 9 | 9 | 9 |
| | 40 °C | 8 | 8 | 8 | 6 |

Similar to the example above, also the powder stability of the powder paint compositions of examples XXIII, C-XXIII, XXIV, C-XXIV was measured after 3 weeks at 40 °C. The results are presented in table 18 below.

Table 18 Powder stability of powder paint

| Compositions XXIII. C-XXIII, XXIV, C-XXIV | |
|---|---|
| Example | After 3 weeks at 40 °C |
| XXIII | 3 |
| C-XXIII | 7 |
| XXIV | 5 |
| C-XXIV | 9 |

**Claims**

**1.** Anti-bridging agent having a general formula $X_n$-$Y_m$ wherein

- X is a group with an affinity to a pigment particle and/or to a filler particle and X is selected from the group consisting of the esters from phosphoric acid ($-O-PO_2H_2$), phosphonic acid, sulphuric acid, sulphonic acid, sulfamine acid ($-O-SO_2NH_2$), boric acid ($-O-B(OH)_2$), pyridine ethanol, hexachloro endomethylene tetrahydro phthalic acid (HET acid), maleic acid and combinations thereof;and

- Y is a group with an affinity to a polymer and Y is polyester-, polyacrylate- or polyurethane-polymer chain; and
- n is an integer from 1 to 3; and
- m is an integer from 1 to 4; and
- the glass transition temperature of the anti-bridging agent as determined by differential scanning Calorimetry (DSC) at a heating rate of 5 °C/min, is at least 30 °C and less than 70 °C.

2. Anti-bridging agent according to claim 1, wherein the glass transition temperature of the anti-bridging agent is at least 35 °C and less than 70 °C.

3. Anti-bridging agent according to any one of claims 1-2, wherein Y has a linear, branched, star or dendritic structure.

4. Anti-bridging agent according to any one of claims 1-3 wherein Y is a polyester manufactured from at least a polyol monomer selected from the group consisting of neopentyl glycol, ethylene glycol, diethylene glycol, propylene glycol, trimethylolpropane and glycerol and at least a polycarboxylic acid monomer selected from the group consisting of terephthalic acid, isophthalic acid, orthophthalic acid, adipic acid, succinic acid and trimellitic anhydride.

5. A resin composition suitable for use in a powder paint composition comprising

- at least one resin and
- at least one anti-bridging agent according to any one of claims 1-4.

6. A resin composition according to claim 5 wherein the at least one resin is a polyester resin.

7. A resin composition according to any one of claims 5-6 wherein both the resin and the group Y of the anti-bridging agent consist for at least 50 w/w% of the same monomers, wherein the monomers are selected from the group consisting of neopentyl glycol, ethylene glycol, diethylene glycol, propylene glycol, trimethylolpropane, glycerol, terephthalic acid, isophthalic acid, orthophthalic acid, adipic acid, succinic acid and trimellitic anhydride.

8. A resin composition according to any one of claims 5-7 wherein at least 70 mol % of the total amount of anti-bridging agent in the resin composition has n=1 and m=1.

9. A resin composition according to any one of claims 5-8 wherein the amount of the anti-bridging agent is at least 1 w/w % based on the total amount of resin in the resin composition.

10. A resin composition according to any one of claims 5-8 wherein the amount of the anti-bridging agent is at least 1 and at most 5 w/w % based on the total amount of resin in the resin composition.

11. A powder coating composition comprising

- a resin composition according to any one of claims 5-10, and
- a crosslinker.

12. A powder coating composition according to claim 11 wherein the resin composition is present in an amount of 50 to 99 parts by weight and the crosslinker is present in an amount of 1 to 50 parts by weight, and the sum of amount of the resin composition and the crosslinker is 100 parts by weight.

13. A powder coating composition according to any one of claims 11-12, wherein the crosslinker is selected from the group consisting of epoxy resins, polyamides, (blocked) isocyanates, amino resins, polycarboxylic acids, acid anhydrides, polyphenols, a crosslinker comprising β-hydroxyalkylamide units and combinations thereof.

14. A powder coating composition according to any one of claims 11-13 wherein the crosslinker comprises β-hydroxy-alkylamide units.

15. A powder coating composition according to any one of claims 11-14 wherein at least 70 mol % of the total amount of anti-bridging agent in the powder coating composition has n=1 and m=1.

16. A powder paint composition comprising

    - the powder coating composition according to any one of claims 11-15 and
    - at least 5 w/w % of pigment or a combination of a pigment and a filler
    wherein the sum of the pigment and the filler is at least 5 w/w % based on the total composition.

17. A powder paint composition according to claim 16 wherein at least 70 mol % of the total amount of anti-bridging agent in the powder paint composition has n=1 and m=1.

18. A fully or partly coated substrate comprising a coating based on a composition according to any one of claims 11-17, which is fully or partially cured.

19. A coated substrate according to claim 18, wherein the coating has an average thickness of 50 $\mu$m or less and a coverage thickness of 50 $\mu$m or less.

20. A coated substrate according to claim 18 or claim 19, wherein the coating has a long wave roughness of 0.8 $\mu$m or less.

21. A crosslinker composition comprising

    - at least one crosslinker and
    - at least one anti-bridging agent according to any one of claims 1-4.

22. A coated pigment or filler particle coated with an anti-bridging agent according to any one of claims 1 to 4.

23. Use of an anti-bridging agent according to any one of claims 1-4 as anti-yellowing agent in a powder coating composition comprising

    - a crosslinker having $\beta$-hydroxyalkylamide units, and
    - a polymer comprising functional groups capable of reacting with a $\beta$-hydroxyalkylamide unit.


**Patentansprüche**

1. Verbrückungsschutzmittel mit der allgemeinen Formel $X_n$-$Y_m$, wobei

    - X eine Gruppe mit einer Affinität für ein Pigmentpartikel und/oder ein Füllstoffpartikel ist und X ausgewählt ist aus der Gruppe bestehend aus den Estern von Phosphorsäure (-0-$PO_2H_2$), Phosphonsäure, Schwefelsäure, Sulfonsäure, Sulfaminsäure (-O-$SO_2NH_2$), Borsäure (-O-$B(OH)_2$), Pyridin-Ethanol, Hexachlorendomethylentetrahydrophthalsäure (HET-Säure), Maleinsäure und Kombinationen davon; und
    - Y eine Gruppe mit einer Affinität für ein Polymer ist und Y eine Polyester-, Polyacrylat- oder Polyurethan-Polymerkette ist; und
    - n eine ganze Zahl von 1 bis 3 ist; und
    - m eine ganze Zahl von 1 bis 4 ist; und
    - die Glasübergangstemperatur des Verbrückungsschutzmittels, wie bestimmt durch Differentialscanningkalorimetrie (DSC) bei einer Heizrate von 5 °C/min, wenigstens 30 °C und weniger als 70 °C beträgt.

2. Verbrückungsschutzmittel gemäß Anspruch 1, wobei die Glasübergangstemperatur des Verbrückungsschutzmittels wenigstens 35 °C und weniger als 70 °C beträgt.

3. Verbrückungsschutzmittel gemäß einem der Ansprüche 1-2, wobei Y eine lineare, verzweigte, sternförmige oder dendritische Struktur aufweist.

4. Verbrückungsschutzmittel gemäß einem der Ansprüche 1-3, wobei Y ein Polyester ist, hergestellt aus wenigstens einem Polyol-Monomer, ausgewählt aus der Gruppe bestehend aus Neopentylglycol, Ethylenglycol, Diethylenglycol, Propylenglycol, Trimethylolpropan und Glycerol, und wenigstens einem Polycarbonsäure-Monomer, ausgewählt aus der Gruppe bestehend aus Terephthalsäure, Isophthalsäure, Orthophthalsäure, Adipinsäure, Bernsteinsäure und Trimellitinsäureanhydrid.

5. Harzzusammensetzung, die für die Verwendung in einer Pulverfarbzusammensetzung geeignet ist, umfassend

    - wenigstens ein Harz und
    - wenigstens ein Verbrückungsschutzmittel gemäß einem der Ansprüche 1-4.

6. Harzzusammensetzung gemäß Anspruch 5, wobei das wenigstens eine Harz ein Polyesterharz ist.

7. Harzzusammensetzung gemäß einem der Ansprüche 5-6, wobei das Harz und die Gruppe Y des Verbrückungsschutzmittels zu wenigstens 50 w/w-% aus den gleichen Monomeren bestehen, wobei die Monomere ausgewählt sind aus der Gruppe bestehend aus Neopentylglycol, Ethylenglycol, Diethylenglycol, Propylenglycol, Trimethylolpropan, Glycerol, Terephthalsäure, Isophthalsäure, Orthophthalsäure, Adipinsäure, Bernsteinsäure und Trimellitinsäureanhydrid.

8. Harzzusammensetzung gemäß einem der Ansprüche 5-7, wobei wenigstens 70 mol-% der Gesamtmenge an Verbrückungsschutzmittel in der Harzzusammensetzung n = 1 und m = 1 aufweisen.

9. Harzzusammensetzung gemäß einem der Ansprüche 5-8, wobei die Menge des Verbrückungsschutzmittels wenigstens 1 w/w-% bezogen auf die Gesamtmenge an Harz in der Harzzusammensetzung beträgt.

10. Harzzusammensetzung gemäß einem der Ansprüche 5-8, wobei die Menge des Verbrückungsschutzmittels zu wenigstens 1 und höchstens 5 w/w-% bezogen auf die Gesamtmenge an Harz in der Harzzusammensetzung beträgt.

11. Pulverbeschichtungszusammensetzung, umfassend

    - eine Harzzusammensetzung gemäß einem der Ansprüche 5-10 und
    - einen Vernetzer.

12. Pulverbeschichtungszusammensetzung gemäß Anspruch 11, wobei die Harzzusammensetzung in einer Menge von 50 bis 99 Gewichtsteilen vorhanden ist und der Vernetzer in einer Menge von 1 bis 50 Gewichtsteilen vorhanden ist und die Summe der Menge der Harzzusammensetzung und des Vernetzers 100 Gewichtsteile beträgt.

13. Pulverbeschichtungszusammensetzung gemäß einem der Ansprüche 11-12, wobei der Vernetzer ausgewählt ist aus der Gruppe bestehend aus Epoxyharzen, Polyamiden, (geblockten) Isocyanaten, Aminoharzen, Polycarbonsäuren, Säureanhydriden, Polyphenolen, einem Vernetzer umfassend β-Hydroxyalkylamid-Einheiten und Kombinationen davon.

14. Pulverbeschichtungszusammensetzung gemäß einem der Ansprüche 11-13, wobei der Vernetzer β-Hydroxyalkylamid-Einheiten umfasst.

15. Pulverbeschichtungszusammensetzung gemäß einem der Ansprüche 11-14, wobei wenigstens 70 mol-% der Gesamtmenge an Verbrückungsschutzmittel in der Pulverbeschichtungszusammensetzung n = 1 und m = 1 aufweisen.

16. Pulverfarbzusammensetzung, umfassend

    - die Pulverbeschichtungszusammensetzung gemäß einem der Ansprüche 11-15 und
    - wenigstens 5 w/w-% an Pigment oder eine Kombination eines Pigments und eines Füllstoffs, wobei die Summe des Pigments und des Füllstoffs wenigstens 5 w/w-% bezogen auf die Gesamtzusammensetzung bildet.

17. Pulverfarbzusammensetzung gemäß Anspruch 16, wobei wenigstens 70 mol-% der Gesamtmenge an Verbrückungsschutzmittel in der Pulverfarbzusammensetzung n = 1 und m = 1 aufweisen.

18. Vollständig oder teilweise beschichtetes Substrat, umfassend eine Beschichtung auf der Grundlage einer Zusammensetzung gemäß einem der Ansprüche 11-17, die vollständig oder teilweise gehärtet ist.

19. Beschichtetes Substrat gemäß Anspruch 18, wobei die Beschichtung eine mittlere Dicke von 50 μm oder weniger und eine Bedeckungsdicke von 50 μm oder weniger aufweist.

**20.** Beschichtetes Substrat gemäß Anspruch 18 oder Anspruch 19, wobei die Beschichtung eine Langwellenrauigkeit von 0,8 μm oder weniger aufweist.

**21.** Vernetzerzusammensetzung, umfassend

- wenigstens einen Vernetzer und
- wenigstens ein Verbrückungsschutzmittel gemäß einem der Ansprüche 1-4.

**22.** Beschichtetes Pigment oder Füllstoffpartikel, beschichtet mit einem Verbrückungsschutzmittel gemäß einem der Ansprüche 1-4.

**23.** Verwendung eines Verbrückungsschutzmittels gemäß einem der Ansprüche 1-4 als Vergilbungsschutzmittel in einer Pulverbeschichtungszusammensetzung, umfassend

- einen Vernetzer mit β-Hydroxyalkylamid-Einheiten und
- ein Polymer, umfassend funktionelle Gruppen, die zur Umsetzung mit einer β-Hydroxyalkylamid-Einheit fähig sind.

**Revendications**

**1.** Agent anti-pontage ayant une formule générale $X_n$-$Y_m$ dans laquelle

- X est un groupe avec une affinité pour une particule de pigment et/ou pour une particule de charge et X est choisi dans le groupe constitué par les esters d'acide phosphorique ($-O-PO_2H_2$), acide phosphonique, acide sulfurique, acide sulfonique, acide sulfamique ($-O-SO_2NH_2$), acide borique ($-O-B(OH)_2$), pyridine-éthanol, acide hexachloro-endométhylène-tétrahydrophtalique (acide HET), acide maléique et les combinaisons de ceux-ci ; et
- Y est un groupe avec une affinité pour un polymère et Y est une chaîne polymère de polyester, polyacrylate ou polyuréthane ; et
- n est un entier de 1 à 3 ; et
- m est un entier de 1 à 4 ; et
- la température de transition vitreuse de l'agent anti-pontage telle que déterminée par calorimétrie différentielle à balayage (DSC) à une vitesse de chauffage de 5°C/min est d'au moins 30°C et de moins de 70°C.

**2.** Agent anti-pontage selon la revendication 1, la température de transition vitreuse de l'agent anti-pontage étant d'au moins 35°C et de moins de 70°C.

**3.** Agent anti-pontage selon l'une quelconque des revendications 1 et 2, dans lequel Y a une structure linéaire, ramifiée, en étoile ou dendritique.

**4.** Agent anti-pontage selon l'une quelconque des revendications 1 à 3 dans lequel Y est un polyester fabriqué à partir d'au moins un monomère de polyol choisi dans le groupe constitué par le néopentylglycol, l'éthylène glycol, le diéthylène glycol, le propylène glycol, le triméthylolpropane et le glycérol et au moins un monomère d'acide polycarboxylique choisi dans le groupe constitué par l'acide téréphtalique, l'acide isophtalique, l'acide orthophtalique, l'acide adipique, l'acide succinique et l'anhydride trimellitique.

**5.** Composition de résine appropriée pour utilisation dans une composition de peinture en poudre comprenant

- au moins une résine et
- au moins un agent anti-pontage selon l'une quelconque des revendications 1 à 4.

**6.** Composition de résine selon la revendication 5 dans laquelle l'au moins une résine est une résine de polyester.

**7.** Composition de résine selon l'une quelconque des revendications 5 et 6 dans laquelle la résine et le groupe Y de l'agent anti-pontage sont tous deux composés pour au moins 50% pds/pds des mêmes monomères, les monomères étant choisis dans le groupe constitué par le néopentylglycol, l'éthylène glycol, le diéthylène glycol, le propylène glycol, le triméthylolpropane, le glycérol, l'acide téréphtalique, l'acide isophtalique, l'acide orthophtalique, l'acide adipique, l'acide succinique et l'anhydride trimellitique.

**8.** Composition de résine selon l'une quelconque des revendications 5 à 7, au moins 70% en moles de la quantité totale d'agent anti-pontage dans la composition de résine ayant n = 1 et m = 1.

**9.** Composition de résine selon l'une quelconque des revendications 5 à 8 dans laquelle la quantité de l'agent anti-pontage est d'au moins 1% pds/pds, rapporté à la quantité totale de résine dans la composition de résine.

**10.** Composition de résine selon l'une quelconque des revendications 5 à 8 dans laquelle la quantité de l'agent anti-pontage est d'au moins 1 et au plus 5% pds/pds, rapporté à la quantité totale de résine dans la composition de résine.

**11.** Composition de revêtement en poudre comprenant

- une composition de résine selon l'une quelconque des revendications 5 à 10, et
- un agent de réticulation.

**12.** Composition de revêtement en poudre selon la revendication 11 dans laquelle la composition de résine est présente dans une quantité de 50 à 99 parties en poids et l'agent de réticulation est présent dans une quantité de 1 à 50 parties en poids, et la somme des quantités de la composition de résine et de l'agent de réticulation fait 100 parties en poids.

**13.** Composition de revêtement en poudre selon l'une quelconque des revendications 11 et 12, dans laquelle l'agent de réticulation est choisi dans le groupe constitué par les résines époxydes, les polyamides, les isocyanates (bloqués), les résines aminées, les acides polycarboxyliques, les anhydrides d'acides, les polyphénols, un agent de réticulation comprenant des motifs $\beta$-hydroxyalkylamide et les combinaisons de ceux-ci.

**14.** Composition de revêtement en poudre selon l'une quelconque des revendications 11 à 13 dans laquelle l'agent de réticulation comprend des motifs $\beta$-hydroxy-alkylamide.

**15.** Composition de revêtement en poudre selon l'une quelconque des revendications 11 à 14, au moins 70% en moles de la quantité totale d'agent anti-pontage dans la composition de revêtement en poudre ayant n = 1 et m = 1.

**16.** Composition de peinture en poudre comprenant

- la composition de revêtement en poudre selon l'une quelconque des revendications 11 à 15 et
- au moins 5% pds/pds de pigment ou d'une combinaison d'un pigment et d'une charge,

la somme du pigment et de la charge représentant au moins 5% pds/pds, rapporté à la composition totale.

**17.** Composition de peinture en poudre selon la revendication 16, au moins 70% en moles de la quantité totale d'agent anti-pontage dans la composition de peinture en poudre ayant n = 1 et m = 1.

**18.** Substrat totalement ou partiellement revêtu comprenant un revêtement basé sur une composition selon l'une quelconque des revendications 11 à 17, qui est totalement ou partiellement durcie.

**19.** Substrat revêtu selon la revendication 18, dans lequel le revêtement a une épaisseur moyenne de 50 $\mu$m ou moins et une épaisseur de couverture de 50 $\mu$m ou moins.

**20.** Substrat revêtu selon la revendication 18 ou la revendication 19, dans lequel le revêtement a une rugosité de grande longueur d'onde de 0,8 $\mu$m ou moins.

**21.** Composition d'agent de réticulation comprenant

- au moins un agent de réticulation et
- au moins un agent anti-pontage selon l'une quelconque des revendications 1 à 4.

**22.** Particule de pigment ou de charge enrobée recouverte d'un agent anti-pontage selon l'une quelconque des revendications 1 à 4.

**23.** Utilisation d'un agent anti-pontage selon l'une quelconque des revendications 1 à 4 comme agent anti-jaunissement dans une composition de revêtement en poudre comprenant

- un agent de réticulation ayant des motifs β-hydroxyalkylamide, et
- un polymère comprenant des groupes fonctionnels susceptibles de réagir avec un motif β-hydroxyalkylamide.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2006066764 A
- US 3752870 A
- US 3787340 A
- US 3758334 A
- GB 1333361 A
- EP 0322834 B1
- CA 2300990

## Non-patent literature cited in the description

- **MISEV T.A.** Powder Coatings, Chemistry and Technology. John Wiley and Sons, 1991
- **MISEV T.A.** Powder Coatings, chemistry and Technology. John Wiley and Sons, 1991
- **T.A.MISEV.** Powder Coatings, Chemistry and Technology. John Wiley and Sons, 1991
- **HUNT et al.** *J. Coat. Technol,* 1998, vol. 70 (880), 45